# EUROPÄISCHE PATENTANMELDUNG

(11) **EP 2 270 785 A1**
(43) Veröffentlichungstag der Anmeldung: **05.01.2011**
(21) Anmeldenummer: 09164390.8
(22) Anmeldetag: 02.07.2009
(51) Int. Cl.: G11B 7/24, G11B 23/00

(54) **Optischer Datenträger mit Rand**

(71) Anmelder: EcoDisc Technology AG, 8004 Zürich (CH)
(72) Erfinder: Schuster, Reno, 23966 Karow (DE); Milttrich, Wilhelm F., 6052 Hergiswil (CH)
(74) Vertreter: Hess, Peter K. G.

(57) **Zusammenfassung**

Die vorliegende Erfindung betrifft einen optischer Datenträger 1, insbesondere eine dünne DVD oder dünne CD, aufweisend ein Substrat 10 und eine Datenschicht 20 wobei das Substrat 10 im Bereich der Datenschicht 20 eine nominale Dicke d1 von kleiner oder gleich 0,9 mm aufweist und wobei das Substrat 10 an seinem umlaufenden äußeren Rand 12 eine konstante nominale Dicke d2 von 0,9 mm - 1,5 mm aufweist, die mindestens 0,2 mm größer ist, als die Dicke d1 des Substrats 10 im Bereich der Datenschicht 20.

## Beschreibung

### 1. Gebiet der Erfindung

Die vorliegende Erfindung betrifft einen optischen Datenträger. Insbesondere betrifft die vorliegende Erfindung eine dünne CD oder dünne DVD in allen verfügbaren Formaten mit einem Substrat und mindestens einer drauf angeordneten Datenschicht.

### 2. Stand der Technik

Bei konventionellen CDs und DVDs wird die darauf gespeicherte Information mittels eines Laserstrahls gelesen bzw. geschrieben. Derartige optische Datenträger sind sehr weit verbreitet und in unterschiedlichen Datenformaten, wie beispielsweise CD-Audio, CD-ROM, CD-R (recordable), CD RW (rewritable), DVD RW, DVD +R, DVD -R, HD DVD, um nur einige zu nennen, erhältlich. Diese vorbekannten optischen Datenträger sind genormt und haben laut ihrem jeweiligen Standard eine Substratdicke im Bereich der Datenschicht von ca. 1,2 mm, nämlich 1,2 mm (-0,06/+0,3mm) bei den DVD Formaten und 1,2 mm (-0,1/+0,3mm) bei den CD Formaten.

Neuere Entwicklungen beschäftigen sich demgegenüber mit umweltfreundlichen "dünnen" Datenträgern, die wesentlich weniger Material verwenden als die konventionellen optischen Datenträger und die daher kostengünstiger, umweltfreundlicher und recyclebar sind. Die dünnen DVD-Formate zeichnen sich dadurch aus, dass sie über den größten Teil ihres Substrats, nämlich mindestens im Bereich der Datenschicht eine Dicke aufweisen, die etwa der Hälfte der Dicke einer konventionellen DVD entspricht, also mithin nur ca. 0,60 mm. Bei der dünnen CD beträgt die Dicke nur ca. 0,9 mm. Dadurch ist auch der sogenannte "CO₂ footprint", also die Menge an CO₂, die für die Herstellung derartiger dünner DVDs oder CDs emittiert wird, wesentlich geringer und liegt bei der DVD lediglich bei etwa 50% von gewöhnlichen DVDs und bei ca. 75% im Vergleich zu gewöhnlichen CDs. Solche "dünnen DVDs" mit einer Substratdicke von 0,4 mm - 0,7 mm sind beispielsweise aus der EP 1 923 886 A1 bekannt und werden von der Anmelderin unter dem Markennamen "EcoDisc" vertrieben.

Dünne DVDs können im Regelfall auf gewöhnlichen DVD-Laufwerken nach dem Stand der Technik problemlos abgespielt werden. Hauptsächlich aus Designgründen werden von einigen Computerherstellern oder Herstellern für Unterhaltungselektronik neuerdings aber sogenannte "Slot-in"-Laufwerke verwendet, bei denen die CD oder DVD durch einen dünnen Schlitz motorisch automatisiert eingezogen wird. Da bei derartigen Laufwerken die CD oder DVD mechanisch ergriffen wird, ergeben sich bei der Verwendung von den oben genannten dünnen DVDs jedoch häufig Probleme beim Einziehen und insbesondere beim Auswerfen der Datenträger aus dem Laufwerk. Daher sind die vorbekannten dünnen DVDs für "Slot-in"-Laufwerke ungeeignet, da es vom speziellen Laufwerkstyp abhängt, ob die DVD ordnungsgemäß eingezogen bzw. ausgeworfen werden kann.

Neben diesen mechanischen Problemen mit "Slot-in"-Laufwerken haben dünne DVDs und CDs grundsätzlich das Problem, naturgemäß eine geringere mechanische Stabilität aufzuweisen, was Lese- oder Schreibprobleme hervorrufen kann. Bei bestimmten Rotationsgeschwindigkeiten können dünne optische Datenträger unerwünschte Vibrationen zeigen, wodurch eine korrekte Fokussierung des Abtastlasers gestört werden kann.

Aus der EP 1 923 880 A1 ist eine Smart Video Card bekannt, die einen ersten Bereich mit einer Chipkarte und einen zweiten Bereich mit einem optischen Aufzeichnungsmedium aufweist, der von dem ersten Bereich mit der Chipkarte weggebrochen werden kann. Der Bereich mit dem optischen Aufzeichnungsmedium ist im Wesentlichen rechteckig oder quadratisch und weist an seinen vier Ecken separate dreieckige Bereiche mit einer Substratdicke auf, die 0,1 mm - 0,2 mm dicker ist als der Aufzeichnungsbereich. Dadurch soll u.a. das Trägheitsmoment des optischen Aufzeichnungsmediums erhöht werden, was die Stabilität des optischen Aufzeichnungsmediums gewährleisten soll. Durch die bauartbedingte unrunde Form und ungleichmäßige diskrete Massenverteilung gelingt dies jedoch nur sehr eingeschränkt. Derartige Smart Video Cards sind für Slot-In-Laufwerke ebenfalls nicht geeignet.

Die US 5,999,513 beschreibt ein dünnes Substrat für eine optische Disk, die einen Diskhalterungsbereich aufweist, der dicker ist als der Aufzeichnungsbereich. Zudem zeigt die optische Disk an ihrem seitlichen Umfang einen Vorsprung, der die Unterseite der optischen Disk vor Kratzern schützt.

Aus der EP 1 921 618 A1 ist ein diskförmiger Datenträger bekannt, der auf der glatten, transparenten Substratoberfläche eine umlaufende Rippe besitzt, um die Substratoberfläche vor Beschädigungen zu schützen. Die Rippe ist jedoch vom Rand des Datenträgers beabstandet, so dass die Kante des Datenträgers angehoben wird und damit der Auswurfmechanismus eines Slot-In-Laufwerks noch eher unter den Datenträger gelangen kann. Die Gefahr des Verklemmens des Datenträgers in einem Slot-In-Laufwerk ist mit diesem Datenträger sogar noch wesentlich höher ist als bei gewöhnlichen dünnen Datenträgern.

Die vorliegende Erfindung stellt sich daher die Aufgabe, dünne DVDs oder CDs dahingehend weiterzuentwickeln, dass sie zuverlässiger gelesen und in jeglichen Laufwerkstypen, insbesondere auch in Slot-In-Laufwerken, verwendet werden können.

### 3. Zusammenfassung der Erfindung

Die vorliegende Erfindung löst die oben genannte Aufgabe durch einen optischen Datenträger gemäß Patentanspruch 1.

Insbesondere wird die genannte Aufgabe durch einen optischen Datenträger gelöst, insbesondere eine dünne DVD oder dünne CD, der ein Substrat und eine Datenschicht aufweist, wobei das Substrat im Bereich der Datenschicht eine Dicke d1 von kleiner oder gleich 0,9 mm aufweist, und wobei das Substrat an seinem umlaufenden äußeren Rand eine konstante nominale Dicke d2 von 0,9 mm - 1,5 mm aufweist, die mindestens 0,2 mm größer ist, als die Dicke d1 des Substrats im Bereich der Datenschicht. Dementsprechend wird erfindungsgemäß ein dünner optischer Datenträger, beispielsweise eine CD oder DVD bereitgestellt, dessen Substrat im Bereich der Datenschicht wesentlich dünner ist als bei gewöhnlichen CDs und DVDs. An seinem äußeren Rand weist der Datenträger jedoch eine Substratdicke auf, die der Dicke einer gewöhnlichen CD oder DVD entspricht.

Die Anmelderin hat erkannt, dass durch diese Maßnahme der erfindungsgemäße Datenträger von jeder Art von Laufwerk, insbesondere auch von sogenannten "Slot-in"-Laufwerken, sicher gegriffen und problemlos ein- und ausgefahren werden kann. Insbesondere stellt das am äußeren Rand verdickte Substrat eine Angriffsfläche bereit, an der ein Auswurfelement eines Laufwerks, beispielsweise ein Auswerferstift, problemlos ansetzen kann, um die DVD oder CD aus dem Laufwerk zu schieben. Ein Grundgedanke der vorliegenden Erfindung liegt darin, bei einer dünnen DVD oder CD trotz substantieller Materialeinsparung von ca. 50% (DVD) bzw. 25% (CD) mechanische Schnittstellen für Laufwerke bereitzustellen, die konventionellen optischen Datenträgern ähneln. Durch diese Maßnahme wird die mechanische Kompatibilität derartiger dünner DVDs und CDs stark erhöht, so dass diese in jeder Art von kommerziellem Laufwerk verwendet werden können.

Zugleich wird durch die Ausbildung des Substrats, das am umlaufenden äußeren Rand eine Dicke von 0,9 - 1,5 mm aufweist, darüber hinaus eine Masse am äußeren Rand des Datenträgers ringförmig angeordnet, die aufgrund ihrer Massenträgheit den optischen Datenträger bei seiner Verwendung stabilisiert. Dadurch dass der Rand des runden Substrats dicker ausgebildet ist, ergibt sich auch eine gleichmäßige Massenverteilung, die für eine gute Stabilisierung und Schwingungsreduzierung notwendig ist. Die erfindungsgemäße Ausbildung des Substrats des Datenträgers führt daher zu dem kombinatorischen Effekt, dass der Datenträger zu beliebigen Laufwerken mechanisch kompatibel ist und dabei gleichzeitig die Lesesicherheit beim Auslesen der Daten erhöht wird.

Bevorzugt hat das Substrat im Bereich der Datenschicht eine nominale Dicke d1 von 0,5 - 0,65 mm und noch bevorzugter von 0,6 mm, wobei der äußere Rand eine nominale Dicke d2 von 1,0 mm - 1,3 mm, noch bevorzugter im Wesentlichen 0,9 mm, 1,0 mm, 1,1 mm, 1,20 mm oder 1,3 mm aufweist. Mit derartigen Maßen wird ein optimaler Ausgleich der widerstreitenden Ziele von Materialeinsparung im Bereich der Datenschicht einerseits und Kompatibilität bzw. Lese- und Schreibsicherheit andererseits erzielt. Hierbei ist die Substratdicke d1 im Bereich der Datenschicht so bemessen, dass der optische Datenträger in einem geeigneten Laufwerk als eine DVD erkannt wird und gelesen werden kann.

In einer anderen bevorzugten Ausführungsform, die sich insbesondere für dünne CDs eignet, hat das Substrat im Bereich der Datenschicht eine nominale Dicke d1 von 0,8 - 0,9 mm und noch bevorzugter von 0,9 mm, wobei der äußere Rand eine nominale Dicke d2 von 1,10 mm - 1,30 mm, noch bevorzugter im Wesentlichen 1,1 mm, 1,2 mm oder 1,3 mm aufweist. Mit derartigen Maßen wird für eine dünne CD ebenfalls ein optimaler Ausgleich der widerstreitenden Ziele von Materialeinsparung im Bereich der Datenschicht einerseits und Kompatibilität bzw. Lese- und Schreibsicherheit andererseits erzielt. Hierbei ist die Substratdicke d1 im Bereich der Datenschicht so bemessen, dass der optische Datenträger in einem geeigneten Laufwerk als eine CD erkannt wird und gelesen werden kann.

In einer weiteren bevorzugten Ausführungsform weist das Substrat an seinem äußeren Rand auf mindestens einer Oberfläche einen umlaufenden Ring auf, der aus der entsprechenden Oberfläche hervorsteht. Die Vergrößerung der Dicke des Substrats am äußeren Rand wird bevorzugt durch einen umlaufenden Ring erzielt. Dieser umlaufende Ring hat den Vorteil, dass er die für die Datenschicht notwendige Fläche nur minimal einschränkt und gleichzeitig Auflagefläche für den optischen Datenträger bietet, sodass die Oberfläche des Datenträgers, von der aus er gelesen wird, gegen Kratzer geschützt ist. Auch bietet der Ring Vorteile beim Bedrucken des optischen Datenträgers, da dieser mit einem äußeren umlaufenden Ring beim Druckvorgang besser durch einen Unterdruck auf einer Oberfläche festgehalten werden kann. Gleichzeitig bleibt dabei die Oberfläche des Datenträgers wesentlich ebener als bei anderen dünnen optischen Datenträgern, die beim Drucken eine kegelförmige Oberfläche ausbilden.

In einer bevorzugten Ausführungsform ist der Ring auf der Oberfläche des Substrats angeordnet, von der aus die Daten mittels eines Lasers gelesen werden können. Durch diese Anordnung ist sichergestellt, dass der Abstand der Datenschicht zum Laser so eingestellt wird, dass der optische Datenträger sicher gelesen werden kann. Bevorzugt hat dabei der Ring eine Dicke d5 von 0,2 mm - 1,0 mm, bevorzugter 0,3 mm - 0,6 mm. Noch bevorzugter ist eine Dicke d5 des Rings von im Wesentlichen 0,3 mm im Falle einer dünnen CD und von im Wesentlichen 0,3 mm oder 0,6 mm im Falle einer dünnen DVD.

In einer anderen bevorzugten Ausführungsform weist das Substrat an seinem äußeren Rand auf beiden gegenüberliegenden Oberflächen je einen umlaufenden Ring auf, der aus der entsprechenden Oberfläche hervorsteht. Der Ring kann auch auf beiden Seiten des Substrats angeordnet sein, um den Abstand der Datenschicht zur Leseeinheit geeignet wählen zu können.

In einer weiteren bevorzugten Ausführungsform verläuft die Dicke des Substrats vom Bereich der Datenschicht zum Rand hin stetig zunehmend. Indem eine stetige Zunahme der Substratdicke zum Rand hin vorgesehen wird, wird verhindert, dass der Ring eine Sprungstelle bildet, die die Leseeinheit des optischen Laufwerks verwirren könnte, wodurch die optische Leseeinheit mit dem Ring kollidieren könnte. Durch den stetigen Verlauf zwischen dem Substrat im Bereich der Datenschicht und dem Rand bzw. dem Ring kann sich die Leseeinheit auf die veränderten Höhen einstellen.

In einer weiteren bevorzugten Ausführungsform weist der Übergang zwischen dem Substrat im Bereich der Datenschicht und dem Ring einen konkaven Querschnitt auf. Durch den konkaven Querschnitt wird der stetige Übergang zwischen Substrat und Ring ausgebildet, wobei trotz maximal möglicher Masse des Rings nur wenig an nutzbarer Datenfläche verloren geht.

In einer weiteren bevorzugten Ausführungsform ist die Masse des Rings oder der Ringe so bemessen, dass bei der Verwendung des Datenträgers eine Massenträgheitsstabilisierung erfolgt. Indem die Masse des einen Rings oder der mehreren Ringe groß genug gewählt wird, erfolgt beim Lesen oder Schreiben des Datenträgers eine Stabilisierung des Datenträgers aufgrund des Massenträgheitsmoments des Rings oder der Ringe. Durch das Massenträgheitsmoment ergibt sich eine radial wirkende Zugkraft des Rings auf das Substrat im Bereich der Datenschicht, so dass Schwingungen der Datenschicht wirksam verhindert werden. Dadurch kann der Datenträger auch bei hohen Geschwindigkeiten sicher ausgelesen oder beschrieben werden. Dies ist insbesondere deshalb vorteilhaft, da der erfindungsgemäße Datenträger im Bereich der Datenschicht ein im Vergleich zu konventionellen Datenträgern sehr dünnes und damit biegeweiches Substrat aufweist. Durch die Anordnung der Masse am äußeren Rand des Substrats erfolgt durch die Rotation im Laufwerk eine Selbststabilisierung des Datenträgers.

In einer weiteren bevorzugten Ausführungsform weist der optische Datenträger weiterhin einen inneren Klemmbereich auf, der eine nominale Dicke von 1,1 mm - 1,5 mm, bevorzugt im Wesentlichen 1,45 mm oder 1,35 mm aufweist. Dieser verdickte innere Klemmbereich erhöht weiterhin die Kompatibilität des Datenträgers mit Slot-In-Laufwerken insbesondere beim Auswurfvorgang. In derartigen Laufwerken wird der Datenträger mit einem axial verfahrbaren und im Betrieb rotierenden Aufnahmedorn gehalten und angetrieben. Beim Spannen des Datenträgers fährt der Aufnahmedorn axial in das Innenloch des Datenträgers ein. Dabei klemmen federnd gelagerte Klemmelemente den Datenträger am Rand seines Innenlochs. Die Anmelderin hat festgestellt, dass dünne Datenträger auch am Aufnahmedorn von Slot-In-Laufwerken verklemmen können, da aufgrund der geringen Dicke der Datenträger die Klemmelemente zu weit aus dem Aufnahmedorn ragen. Damit ist ein Herausziehen des Aufnahmedorns aus dem Innenloch nicht mehr möglich und der Datenträger kann nicht mehr ausgeworfen werden. Indem nun ein innerer Klemmbereich bereitgestellt wird, der eine nominale Dicke von 1,1 mm - 1,5 mm, insbesondere eine Dicke von im Wesentlichen 1,45 mm oder 1,35 mm aufweist, kann dieses Problem nicht mehr auftreten. Die Klemmelemente ragen nur so weit aus dem Aufnahmedorn heraus, wie es auch bei gewöhnlichen "dicken" Datenträgern der Fall ist, so dass der Aufnahmedorn problemlos aus dem Innenloch gezogen werden kann.

Bevorzugt weist das Substrat am Rand des Innenlochs auf der Oberfläche, die der Oberfläche gegenüberliegt, von der aus die Daten mittels eines Lasers gelesen werden können, einen oberen umlaufenden inneren Ring auf, der eine nominale Dicke d7 von 0,2 mm - 0,5 mm, bevorzugt im Wesentlichen 0,4 mm oder 0,3 mm aufweist. Durch einen solchen Ring auf der Oberseite des Datenträgers wird dem Laufwerk eine mechanische Schnittstelle bereitgestellt, die dem Innenloch eines gewöhnlichen optischen Datenträgers ähnelt. Dadurch kann der dünne optische Datenträger in jedem beliebigen Laufwerk sicher ge- und entspannt werden.

Bevorzugt weist das Substrat am Rand des Innenlochs auf der Oberfläche, von der aus die Daten mittels eines Lasers gelesen werden können, einen unteren umlaufenden inneren Ring auf, der eine nominale Dicke d6 von 0,2 mm - 0,5 mm, bevorzugt 0,45 mm aufweist. Dieser Ring auf der Unterseite des Datenträgers dient der besseren Zentrierung des Datenträgers am Aufnahmedorn des Laufwerks und erhöht so weiterhin die mechanische Kompatibilität des dünnen Datenträgers mit jedem beliebigen Laufwerk, insbesondere auch mit Slot-In-Laufwerken Bevorzugt weist das Substrat im Klemmbereich auf der Oberfläche, von der aus die Daten mittels eines Lasers gelesen werden können, einen umlaufenden zweiten äußeren Ring auf, der eine nominale Dicke d4 von 0,2 mm - 0,4 mm, bevorzugt im Wesentlichen 0,3 mm aufweist. Dieser zweite Ring dient beim Abspielen des Datenträgers als untere Auflagefläche und bestimmt damit die Position des Datenträgers im Laufwerk. Bevorzugt ist der zweite Ring 1,7 mm breit, besitzt abgeschrägte Kanten und hat einen äußeren Durchmesser D4 von 27,4 mm.

Bevorzugt weist das Substrat im Klemmbereich auf der Oberfläche, die der Oberfläche gegenüberliegt, von der aus die Daten mittels eines Lasers gelesen werden können, auf die Oberfläche aufgedruckte Punkte auf, die eine nominale Dicke d8 von 0,2 mm - 0,3 mm, bevorzugt im Wesentlichen 0,2 mm aufweisen. Diese aufgedruckten Punkte dienen ebenfalls der exakten Höhenpositionierung des Datenträgers im Laufwerk. Vorteilhaft ist, dass sie aufgedruckt werden, so dass der Datenträger problemlos bis zum Innenloch bedruckt werden kann. Zudem entstehen - im Gegensatz zu Erhebungen, die am Substrat selbst vorgesehen werden - keinerlei Spannungen in diesem Bereich, die Leseprobleme hervorrufen könnten.

Weitere bevorzugte Ausführungsformen ergeben sich aus Unteransprüchen.

### 4. Kurze Beschreibung der Zeichnung

Im Folgenden werden die bevorzugten Ausführungsformen der Erfindung anhand der beiliegend Figuren erläutert. In denen zeigt:
- Fig. 1:: Einen Querschnitt einer Ausführungsform eines erfindungsgemäßen opti- schen Datenträgers, insbesondere einer dünnen DVD, wobei zur Verdeut- lichung der Leserichtung eine Leseeinheit eines Laufwerks beispielhaft eingezeichnet wurde;
- Fig. 2:: Einen Querschnitt einer Ausführungsform eines erfindungsgemäßen opti- schen Datenträgers, insbesondere einer dünnen CD, wobei zur Verdeutli- chung der Leserichtung eine Leseeinheit eines Laufwerks beispielhaft eingezeichnet wurde;
- Fig. 3:: Eine Vorderansicht eines "Slot-in"-Laufwerks mit einem eingeführten optischen Datenträger gemäß Fig. 1;
- Fig. 4:: Im Detail eine Prinzipskizze des Auswurfvorgangs eines optischen Da- tenträgers gemäß Fig. 1 in einem "Slot-in"-Laufwerk; und
- Fig. 5:: Eine Teilschnittansicht eines Aufnahmedorns eine Slot-In-Laufwerks mit eingespanntem dünnen optischen Datenträger gemäß Fig. 1.

### 5. Detaillierte Beschreibung bevorzugter Ausführungsformen

Im Folgenden werden bevorzugte Ausführungsformen der Erfindung mit Bezug auf die begleitenden Zeichnungen im Detail beschrieben. Die Merkmale einer Ausführungsform können auch mit denen anderer Ausführungsformen kombiniert werden.

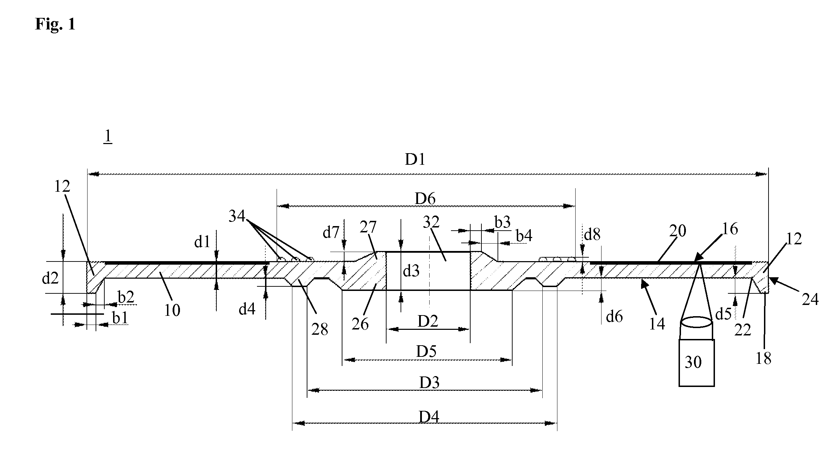

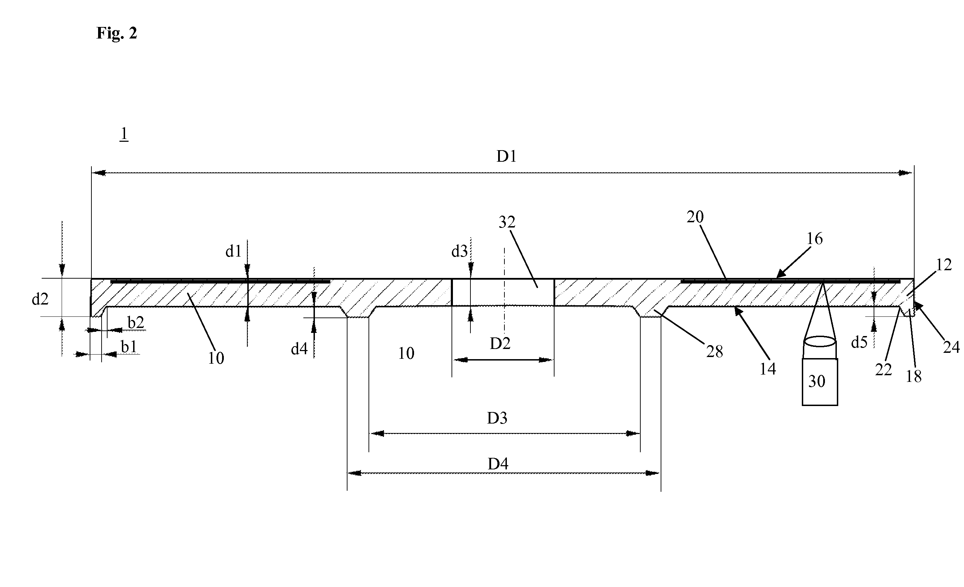

Die Figuren 1 und 2 zeigen Querschnitte von erfindungsgemäßen optischen Datenträgern 1. Der optische Datenträger 1 kann beispielsweise eine DVD oder eine CD in jeweils allen möglichen Varianten und mit allen möglichen Datentypen und Datenstrukturen sein. Beispielsweise könnte der optische Datenträger 1 eine DVD sein, auf der Videodaten gespeichert sind. Die vorliegende Erfindung lässt sich jedoch auch auf andere optische Datenträger in beliebigen Formaten anwenden. Die vorliegende Erfindung ist nicht auf bestimmte Datenträgerformate beschränkt. Der in Fig. 1 dargestellte Datenträger stellt bevorzugt eine dünne DVD und der in Fig. 2 dargestellte Datenträger bevorzugt eine dünne CD dar.

Der optische Datenträger 1 weist ein Substrat 10 in Form einer runden flachen Scheibe auf, das bevorzugt aus einem optisch durchlässigen Polycarbonat spritzgegossen ist. Auf dem rotationssymmetrischen Substrat 10 ist mindestens eine Datenschicht 20 angeordnet, auf der die eigentlichen digitalen Daten des Datenträgers durch sog. "pits" und "lands" gespeichert sind. Üblicherweise können auf der Datenschicht 20 weitere Datenschichten oder Lackschichten angeordnet sein, um den optischen Datenträger 1 zu bedrucken.

Das Substrat des Datenträgers 1 kann beispielsweise einen Standarddurchmesser D1 aufweisen, der für eine CD oder DVD 120 mm beträgt. Kleinere DVDs oder CDs sind ebenfalls bekannt und haben einen Durchmesser D1 von 80 mm. Es sollte angemerkt werden, dass die in Fig. 1 und 2 dargestellten Querschnitte nicht maßstabsgerecht sind und insbesondere die Dicke der Datenträger 1 stark überzogen dargestellt wurde.

In üblicher Weise weist der Datenträger 1 im Zentrum eine Öffnung 32 auf, die dem Einspannen des Datenträgers 1 dient und die einen Durchmesser D2 von nominal 15 mm aufweist.

Der Klemmbereich des in Fig. 1 dargestellten Datenträgers erstreckt sich von seinen inneren Klemmringen 26 und 27 bis zu einem zweiten äußeren Klemmring 28, wobei die inneren Klemmringe 26, 27 dem Substrat 10 an der Öffnung 32 eine Dicke d3 von 1,1 mm - 1,5 mm, bevorzugt 1,3 mm - 1,5 mm und noch bevorzugter nominal 1,45 mm oder 1,35 mm verleihen. Der äußere Klemmring 28 kann beispielsweise 0,3 mm (Maß d4) von der unteren Oberfläche 14 des Substrats hervorstehen. Damit wird der Datenträger 1 in einem Laufwerk auf so eine Höhe eingespannt, dass er beim Lesen oder Schreiben als DVD erkannt wird. Hierfür ist insbesondere der Abstand zwischen einer Leseeinheit 30 und der Datenschicht 20 und die Dicke und Ebenheit des Substrats 10 entscheidend.

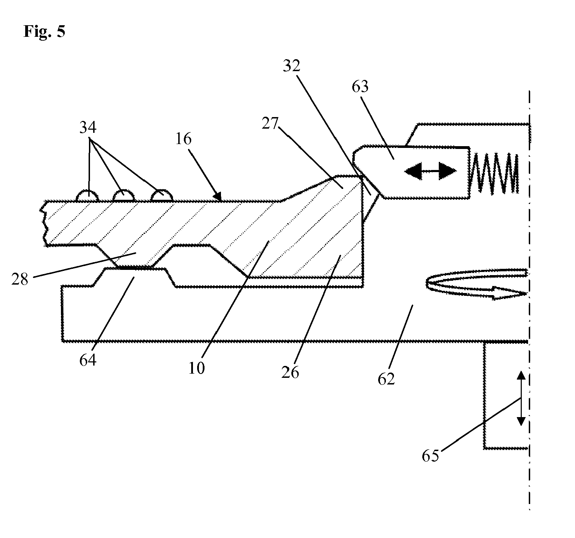

Der innere Klemmring 26 ist bei einer dünnen DVD bevorzugt 0,45 mm von der unteren Substratoberfläche 14 beabstandet (Maß d6) und zentriert damit den Datenträger 1 sicher auf einem Spanndorn 62 eines Laufwerks (vgl. Fig. 5).

Bei der in Fig. 2 dargestellten dünnen CD steht der äußere Klemmring 28 um 0,3 mm von der unteren Substratoberfläche 14 hervor (Maß d4), so dass das Substrat 10 an dieser Stelle nominal 1,2 mm dick ist.

Der äußere Klemmring 28 erreicht seine nominale Dicke d4 im Durchmesserbereich D3 - D4 von 24 mm - 27,4 mm. Der Datenträger 1 liegt mit seinem äußeren Klemmring 28 auf einem entsprechenden Ring 64 des Laufwerks auf, wie in Fig. 5 dargestellt. Im Gegensatz zu gewöhnlichen optischen Datenträgern dient der Klemmring 28 dem Einspannen und Lagern des Datenträgers 1 und nicht nur als sog. "stacking ring" dem Stapeln des Datenträgers während der Produktion.

Die Winkel, mit denen der äußere Klemmring 28 , der innere Klemmring 26 und der oberer Klemmring 27 in die ebenen Bereiche des Substrats 10 übergehen, betragen bevorzugt 30° oder weniger.

Durch die besondere Ausbildung des Klemmbereichs mit den Klemmringen 26, 27 und 28 wird sichergestellt, dass der Datenträger 1 in jedem Laufwerk sicher gespannt und entspannt werden kann. Insbesondere in Slot-In-Laufwerken trat das Problem auf, dass dünne Datenträger zwar eingebracht und gespannt werden konnten aber kein Entspannen und Auswerfen des Datenträgers mehr möglich war. Die Anmelderin hat erkannt, dass die Probleme beim Entspannen der Datenträger darin begründet sind, dass der sog. Aufnahmedorn 62 nach dem Spannen zu weit in die Öffnung 32 des Datenträgers 1 hineinragt und sich dann die Klemmelemente 63 (vgl. Fig. 5) am Rand der Öffnung 32 verklemmen können. Dann kann der Aufnahmedorn 62 nicht mehr aus der Öffnung 32 herausgefahren werden, wie durch den Pfeil 65 angedeutet. Fig. 5 zeigt einen erfindungsgemäßen Datenträger, hier am Beispiel einer dünnen DVD, bei dem dieses Verklemmen nicht mehr auftreten kann, da die Dicke d3 des Innenrandes der Öffnung 32 1,10 mm - 1,5mm, bevorzugt nominal 1,45 mm oder 1,35 mm beträgt. Dies wird bei einer DVD nach Fig. 1 durch den oberen Klemmring 27 sichergestellt, der um das Maß d7 von 0,4 mm oder 0,3 mm von der oberen Oberfläche 16 hervorsteht.

In der dargestellten Ausführungsform ist der obere Klemmring lediglich 0,5 mm breit (Maß b3) und geht dann mit einer 1,0 mm breiten Kegelfläche (Maß b4) in die Oberfläche 16 über. Durch diesen flachen, kegelförmigen Übergang ist es problemlos möglich den Datenträger bis an die Öffnung 32 heran per Siebdruck zu bedrucken. Der flach ansteigende Übergang mit der Breite b4 stellt für einen Siebdruckrakel kein Hindernis dar.

Die Dicke d3 der dünnen CD aus Fig. 2 beträgt an der Öffnung 32 lediglich 0,9 mm. Da jedoch durch den Klemmring 28 die Oberseite 16 auf ein Maß von 1,2 mm (Maß d3 + d4) über der Auflagefläche am Klemmring 28 angehoben wird, ist auch hier ein sicheres Spannen und Entspannen der dünnen CD in Slot-In-Laufwerken gegeben. Ein Verklemmen tritt auch hier nicht auf.

Für eine exakte Höhenpositionierung des Datenträgers 1 im Laufwerk und ein sicheres Spannen in gewöhnlichen Laufwerken ist der Datenträger 1 der Fig. 1 mit auf der Oberfläche 16 aufgedruckten Punkten 34 versehen. Diese Punkte 34 dienen auch dazu, zusammen mit dem äußeren Klemmring 28 beim Einspannen eine Spannung in den Datenträger im Bereich der der Datenschicht 20 einzubringen, die den Datenträger 1 in eine ebene Form zwingt und so stabilisiert. Dadurch werden Schwingungen beim Lesen und Schreiben verhindert und der Datenträger 1 besser les- und beschreibbar. Durch die besondere Form des Spannbereichs tritt dieser Effekt auch bei der Verwendung in einem Laptop-Laufwerk und bei Slot-In-Laufwerken auf. Dort wird der Datenträger mit dem äußeren Klemmring 28 und an der oberen Kante der Öffnung 32 geklemmt, wie dies in Fig. 5 schematisch dargestellt ist. Auch durch diese Art des Einspannens ergeben sich die vorteilhaften Spannungen im Datenbereich 20 des Substrats 10

Das Aufdrucken der Punkte 34 hat weiterhin den Vorteil, dass der Datenträger 1 auf der ganzen Oberfläche 16 bedruckt werden kann. Bei in das Substrat eingeformten Vorsprüngen ist das nicht möglich. Zudem werden durch das Aufdrucken der Punkte 34 keine Spannungen in das Substrat 10 eingebracht, die die Lesbarkeit im inneren Durchmesserbereich beinträchtigen könnten. Die Punkte 34 liegen bevorzugt in einem Durchmesserbereich D6 von kleiner gleich 38 mm und sind bevorzugt 0,2 mm - 0,3mm, insbesondere im Wesentlichen 0,2 mm oder 0,3 mm hoch (Maß d8).

An den Klemmbereich nach außen anschließend ergibt sich der Bereich der Datenschicht 20, welche in der Darstellung der Figuren 1 und 2 auf der oberen Seite 16 des Substrats angeordnet ist. Diese Datenschicht 20 wird durch das Substrat 10 hindurch mittels einer Leseeinheit 30 gelesen, die den optischen Datenträger von seiner Unterseite 14 aus mittels eines Laserstrahls abtastet.

Das Substrat 10 hat im Bereich der Datenschicht 20 eine Dicke d1, die für eine dünne DVD nominal, also zu- und abzüglich üblicher Fertigungstoleranzen, kleiner oder gleich 0,65 mm beträgt, bevorzugt 0,5 - 0,65 mm und noch bevorzugter nominal 0,6 mm beträgt. Damit ist der optische Datenträger im Bereich der Datenschicht im Wesentlichen lediglich halb so dick wie eine gewöhnliche CD oder eine gewöhnliche DVD. Bei einer dünnen CD hat das Substrat 10 im Bereich der Datenschicht eine Dicke d1, die nominal 0,8 mm - 0,9 mm, bevorzugt 0,9 mm beträgt, damit die dünne CD in einem entsprechenden Laufwerk auch als CD erkannt wird. Hier ist aufgrund der optischen Verhältnisse eine gewisse Mindestdicke des Substrats von ca. 0,8 mm - 0,9 mm erforderlich.

Erfindungsgemäß weist das Substrat an seinem äußeren Rand eine konstante Dicke d2 von 0,9 mm - 1,5 mm auf. Bevorzugt ist eine Dicke d2 von nominal 0,9 mm - 1,3 mm und noch bevorzugter von nominal 0,9 mm. Andere mögliche Dicken d2 sind nominal 1,0 mm, 1,1 mm, 1,2 mm, 1,3 mm, 1,4mm oder 1,5 mm. Damit ist die Dicke d2 des äußeren Rands 12 in jedem Fall größer ist als die Dicke d1 des Substrats 10 im Bereich der Datenschicht 20. Bevorzugt sollte der Rand 12 mindestens 0,2 mm dicker sein als das Substrat 10 im Bereich der Datenschicht 20. Wie dargestellt wird dies erreicht, indem auf die untere Oberfläche 14 des Substrats 10 ein umlaufender Ring 18 angeformt wird, der aus der Oberfläche 14 hervorsteht. Andere Konfigurationen sind jedoch ebenfalls denkbar, insbesondere eine Anordnung, bei der sowohl ein Ring am äußeren Rand der Oberfläche 14 als auch am äußeren Rand der gegenüberliegenden Oberfläche 16 von dieser Oberfläche 16 hervorsteht. Der Ring 18 steht bevorzugt um ein Maß d5 von 0,2 mm - 1,0 mm, bevorzugter 0,3 mm - 0,6 mm, für eine DVD bevorzugt 0,3 mm oder 0,6 mm und für eine CD bevorzugt 0,30 mm von der unteren Oberfläche 14 hervor. Der Ring ist bei der DVD gemäß Fig. 1 bevorzugt 0,8 mm breit (Maß b1) und geht mittels einem abgeschrägten Bereich mit einer Breite von 0,18 mm (Maß b2) in die untere Oberfläche 14 über. Bei der CD gemäß Fig. 2 ist der Ring 18 bevorzugt 0,82 mm breit (Maß b1) und geht mittels einem abgeschrägten Bereich mit einer Breite von 0,10 mm (Maß b2) in die untere Oberfläche 14 über.

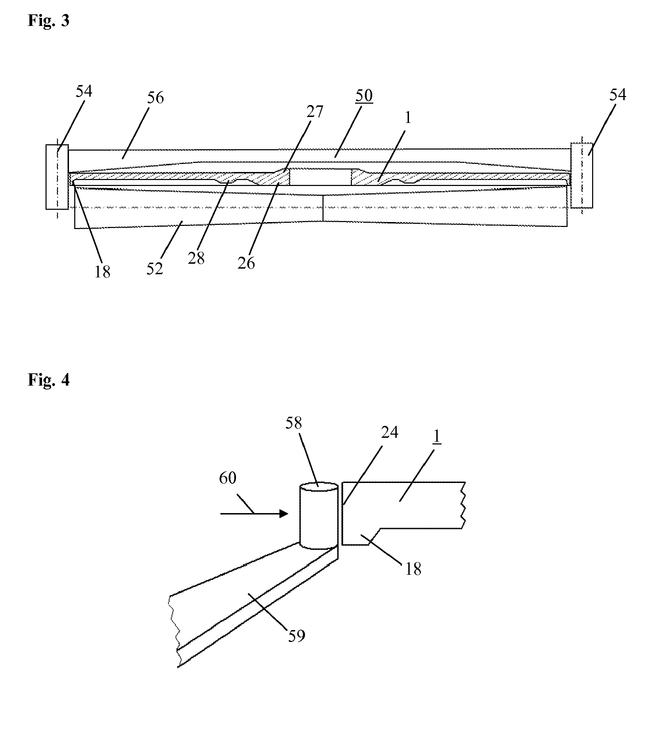

Indem der äußere Rand dicker ausgeführt wird, ist es möglich, den optischen Datenträger 1 zusammen mit allen derzeit auf dem Markt befindlichen Laufwerken zu verwenden. Insbesondere können erfindungsgemäße optische Datenträger 1 auch in sogenannten "Slot-in"-Laufwerken verwendet werden, die einen Auswurfstift 58 aufweisen, der beim Auswurfvorgang auf die äußere Kantenfläche 24 des Substrats drückt, wie dies in Fig. 4 im Detail dargestellt ist. Hierbei drückt der Auswurfstift 58, der an einem schwenkbaren Auswerferarm 59 eines optischen Laufwerks 50 befestigt ist, wie mit dem Pfeil 60 dargestellt, auf eine Kantenfläche 24 eines Substrats 10, die durch den Ring 18 auf quasi Standardmaß vergrößert wurde. Dadurch ist sichergestellt, dass der Auswurfstift 58 stets die Kantenfläche 24 des optischen Datenträgers 1 trifft und diesen sicher auswerfen kann. Insbesondere wird ausgeschlossen, dass der Auswurfstift 58 unter den Datenträger 1 rutschen kann und sich dann verklemmen würde.

Das Vorsehen eines Rings 18 bzw. einer Vergrößerung der Dicke des Substrats 10 an ihrem Rand hat jedoch auch große Vorteile für die Lese- bzw. Schreibsicherheit. Dünne DVDs und CDs tendieren nämlich dazu, bei bestimmten Geschwindigkeiten in Schwingungen zu geraten, so dass der Laser nicht mehr genau fokusiert werden kann und ein Lesen oder Schreiben von Daten nicht mehr möglich ist. Dies liegt an der wesentlich geringeren mechanischen Stabilität des hier verwendeten dünnen Substrats. Durch das Vorsehen einer höheren Masse am Rand des optischen Datenträgers, wie dies hier durch den Ring 18 erfolgt, ergibt sich eine Massenträgheitsstabilisierung des optischen Datenträgers. Einfach ausgedrückt zieht die Masse des Rings 18 aufgrund ihrer Massenträgheit das Substrat 10 radial nach außen und spannt somit den Bereich des Substrats 10, auf dem sich die Datenschicht 20 befindet. Durch diese eingebrachte radiale Spannung wird der Datenträger stabilisiert und Schwingungen werden wirksam verhindert. Somit ist ein Lesen oder Schreiben auch bei hohen Geschwindigkeiten sicher möglich.

Der Übergang 22 zwischen dem Substrat 10 im Bereich der Datenschicht 20 und dem Ring 18 bzw. der äußeren Kante 12 des Substrats ist bevorzugt stetig ausgebildet, damit die Leseeinheit 30 beim erstmaligen Einlesen des Datenträgers 1 nicht an einem unstetigen Übergang 22 am äußeren Ende 12 des Datenbereichs verwirrt wird, was möglicherweise zu Kollisionen mit dem Datenträger 1 führen könnte. Durch den stetigen Übergang 22 wird sichergestellt, dass sich die Leseeinheit 30 in sicherem Abstand von der Oberfläche 14 des Datenträgers 1 verfahren wird.

Fig. 3 zeigt die Verwendung eines erfindungsgemäßen optischen Datenträgers 1 in einem "Slot-in"-Laufwerk 50 . Ein derartiges "Slot-in"-Laufwerk 50 besteht aus einer oberen starren Datenträgerführung 56, die den eingeschobenen Datenträger 1 an seinem äußeren oberen Rand führt. An dem äußeren Rand des Laufwerks 50 sind sogenannte Führungsrollen 54 angebracht, die den Datenträger seitlich zentrieren. Von unten wird der Datenträger 1 über zwei konisch zulaufende Laderollen 52 geführt, die den Datenträger 1 in das "Slot-in"-Laufwerk 50 hineinziehen.

Man erkennt, dass durch den umlaufenden Ring 18 des erfindungsgemäßen Datenträgers 1, dieser wie eine gewöhnliche DVD oder eine gewöhnliche CD in einem derartigen "Slot-in"-Laufwerk 50 verwendet werden kann. Dies liegt im Wesentlichen daran, dass durch den äußeren Ring 18 und die Klemmringe 26, 27, 28 der eigentlich dünne optische Datenträger 1 zu dem Laufwerk 50 vergleichbare Schnittstellen bildet, wie eine gewöhnliche DVD oder eine gewöhnliche CD. Dementsprechend ergeben sich hierdurch weder Probleme beim Einführen des Datenträgers 1 in ein derartiges Laufwerk 50 noch Probleme beim Spannen, Lesen oder Schreiben und Ausbringen des Datenträgers 1 aus einem solchen "Slot-in"-Laufwerk 50.

## Patentansprüche

1. Optischer Datenträger (1), insbesondere eine dünne DVD oder dünne CD, aufweisend:
a) ein Substrat (10); und
b) eine Datenschicht (20); wobei
c) das Substrat (10) im Bereich der Datenschicht (20) eine nominale Dicke (d1) von kleiner oder gleich 0,9 mm aufweist; und wobei
d) das Substrat (10) an seinem umlaufenden äußeren Rand (12) eine konstante nominale Dicke (d2) von 0,9 mm - 1,5 mm aufweist, die mindestens 0,2 mm größer ist, als die Dicke (d1) des Substrats (10) im Bereich der Datenschicht (20).

2. Optischer Datenträger gemäß Anspruch 1, wobei das Substrat (10) im Bereich der Datenschicht (20) eine nominale Dicke (d1) von 0,5 mm - 0,65 mm, bevorzugt 0,6 mm aufweist und am äußeren Rand (12) eine nominale Dicke (d2) von 0,9 mm - 1,3 mm, bevorzugt im Wesentlichen 0,9 mm, 1,0 mm, 1,1 mm, 1,2 mm oder 1,3 mm aufweist.

3. Optischer Datenträger gemäß Anspruch 1, wobei das Substrat (10) im Bereich der Datenschicht (20) eine nominale Dicke (d1) von 0,8 mm - 0,9 mm, bevorzugt 0,9 mm aufweist und am äußeren Rand (12) eine nominale Dicke (d2) von 1,1 mm - 1,3 mm, bevorzugt im Wesentlichen 1,1 mm, 1,2 mm oder 1,3 mm aufweist.

4. Optischer Datenträger gemäß einem der Ansprüche 1 - 3, wobei das Substrat (10) an seinem äußeren Rand (12) auf mindestens einer Oberfläche (14) einen umlaufenden Ring (18) aufweist, der aus der entsprechenden Oberfläche (14) hervorsteht.

5. Optischer Datenträger gemäß Anspruch 4, wobei der Ring (18) auf der Oberfläche (14) des Substrats (10) angeordnet ist, von der aus die Daten mittels eines Lasers (30) gelesen werden können.

6. Optischer Datenträger gemäß Anspruch 4 oder 5, wobei der Ring (18) eine Dicke (d5) von 0,2 mm - 1,0 mm, bevorzugt 0,3 mm - 0,6 mm und noch bevorzugter von im Wesentlichen 0,3 mm oder 0,6 mm aufweist.

7. Optischer Datenträger gemäß Anspruch 4, wobei das Substrat (10) an seinem äußeren Rand (12) auf beiden gegenüberliegenden Oberflächen (14, 16) einen umlaufenden Ring (18) aufweist, der aus der entsprechenden Oberfläche (14, 16) hervorsteht.

8. Optischer Datenträger gemäß einem der Ansprüche 1 - 7, wobei die Dicke (d1) des Substrats (10) vom Bereich der Datenschicht (20) zum Rand (12) hin einen stetigen Verlauf hat.

9. Optischer Datenträger gemäß einem der Ansprüche 4 - 8, wobei die Masse des umlaufenden Rings (18) oder der umlaufenden Ringe (18) so bemessen ist, dass bei der Verwendung des Datenträgers (1) eine Massenträgheitsstabilisierung erfolgt.

10. Optischer Datenträger gemäß einem der Ansprüche 1 - 9, weiterhin aufweisend einen inneren Klemmbereich 26, der eine nominale Dicke (d3) von 1,1 mm - 1,5 mm, bevorzugt im Wesentlichen 1,45 mm oder 1,35 mm aufweist.

11. Optischer Datenträger gemäß einem der Ansprüche 1 - 10, wobei das Substrat (10) am Rand des Innenlochs (32) auf der Oberfläche (16), die der Oberfläche (14) gegenüberliegt, von der aus die Daten mittels eines Lasers (30) gelesen werden können, einen oberen umlaufenden inneren Ring (27) aufweist, der eine nominale Dicke (d7) von 0,2 mm - 0,5 mm, bevorzugt im Wesentlichen 0,4 mm oder 0,3 mm aufweist.

12. Optischer Datenträger gemäß einem der Ansprüche 1 - 11, wobei das Substrat (10) am Rand des Innenlochs (32) auf der Oberfläche (14), von der aus die Daten mittels eines Lasers (30) gelesen werden können, einen unteren umlaufenden inneren Ring (27) aufweist, der eine nominale Dicke (d6) von 0,2 mm - 0,5 mm, bevorzugt 0,45 mm aufweist.

13. Optischer Datenträger gemäß einem der Ansprüche 1 - 12, wobei das Substrat (10) im Klemmbereich auf der Oberfläche (14), von der aus die Daten mittels eines Lasers (30) gelesen werden können, einen umlaufenden zweiten äußeren Ring (28) aufweist, der eine nominale Dicke (d4) von 0,2 mm - 0,4 mm, bevorzugt im Wesentlichen 0,3 mm aufweist.

14. Optischer Datenträger gemäß einem der Ansprüche 1 - 13, wobei das Substrat (10) im Klemmbereich auf der Oberfläche (16), die der Oberfläche (14) gegenüberliegt, von der aus die Daten mittels eines Lasers (30) gelesen werden können, auf die Oberfläche (14) aufgedruckte Punkte (34) aufweist, die eine nominale Dicke (d8) von 0,2 mm - 0,3 mm, bevorzugt im Wesentlichen 0,2 mm aufweisen.
